# FASCICULE DE BREVET EUROPEEN

(11) **EP 1 429 055 B1**
(45) Date de publication et mention de la délivrance du brevet: **16.11.2005**
(21) Numéro de dépôt: 03293032.3
(22) Date de dépôt: 04.12.2003
(51) Int. Cl.: F16H 59/02

(54) **Module intégral de contrôle de marche d'un véhicule automobile**
Integriertes Anlass- und Getriebeschaltmodul in einem Fahrzeug
Lever integrating ignition and gearshift operation in a vehicle

(30) Priorité: 11.12.2002 FR 0215665
(43) Date de publication de la demande: 16.06.2004
(73) Titulaire: Peugeot Citroen Automobiles S.A., 78140 Vélizy Villacoublay (FR)
(72) Inventeur: Gaully, Bruno, 92300 Levallois-Perret (FR); Pecoraro, Laurent, 78100 Saint-Germain-en-Laye (FR)
(74) Mandataire: Fréchède, Michel

(56) Documents cités:
- WO-A-96/32299
- WO-A-02/066279
- FR-A- 1 197 404
- US-A- 5 528 953
- US-A1- 2001 026 212

## Description

Les véhicules automobiles actuels, notamment les véhicules personnels, sont équipés soit d'une boîte à vitesses manuelle BVM, soit d'une boîte à vitesses automatique BVA, ou encore d'une boîte à vitesses manuelle pilotée BVMP.

Dans tous les cas, cinq fonctions principales sont associées à la dynamique, ou marche, du véhicule. Les fonctions précitées sont, en général, actionnées par des organes distincts de la manière ci-après ;
- a : sélecteur de sens : marche avant, neutre, marche arrière, généralement assuré par un levier à commande mécanique ;
- b : changement des rapports de boîte : assuré en mode manuel par un levier mécanique, souvent commun à la fonction sélecteur de sens, ou par des boutons poussoirs électriques disposés au niveau du volant ;
- c : démarrage moteur : commandé entre une position d'arrêt "OFF" et une position de contact "ON", soit par un bouton poussoir, soit par la rotation d'un barillet de démarrage, déverrouillée par une clé de contact, par commande exclusivement électrique.

Sur les véhicules automobiles actuels, la quasi totalité de ces fonctions est assurée par des organes de commande dédiés.

A ce jour, aucun regroupement de commande n'a été proposé sur des véhicules de série, une telle multiplicité d'organes n'est donc pas favorable à un grand nombre de critères d'ergonomie fonctionnelle, et, en définitive, de sécurité.

En particulier, les solutions techniques actuelles posent différents problèmes, lesquels peuvent être résumés ci-après :
- toutes les fonctions mises en oeuvre par l'intermédiaire d'une commande mécanique sont sujettes à de fortes contraintes de conception et de réalisation architecturales.

Dans le cas du levier de boîte à vitesses automatique BVA, un tel levier permet de sélectionner le type de roulage souhaité selon les différentes positions, la position de parcage, Park, la marche arrière R, le neutre N, la marche avant automatique D, (Drive).

Ce levier est actuellement relié à la boîte à vitesses par l'intermédiaire d'un câble. Un tel principe de liaison mécanique réduit fortement les possibilités d'implantation dans l'habitacle du véhicule et nécessite un volume technique minimum important. En raison des possibilités d'implantation réduites, les commandes précitées se trouvent ainsi limitées à des zones de l'habitacle du véhicule peu nombreuses et/ou peu intéressantes, en termes de prestations.

En outre, à la contrainte architecturale d'implantation précitée s'ajoute le problème de transversalité ou portabilité de la commande, c'est-à-dire du transfert de la commande d'un type de véhicule à un autre.

En effet, la commande mécanique étant dimensionnée exclusivement pour l'environnement du véhicule ou de la gamme de véhicule auquel celle-ci est destinée, le transfert d'une même commande mécanique ou d'une commande mécanique semblable est peu aisé à mettre en oeuvre, en l'absence d'adaptation ou de modifications. L'absence de portabilité d'une gamme à l'autre présente ainsi l'inconvénient d'une faible standardisation des commandes mécaniques, génératrice d'un fort coût.

Enfin, en raison du volume technique minimum important nécessaire à l'implantation de la commande mécanique, l'utilisateur, conducteur du véhicule automobile, ne bénéficie pas d'une accessibilité optimale qui lui permettrait, par exemple, d'actionner toutes les fonctions précitées, en maintenant les mains sur le volant du véhicule.

Lorsque les fonctions associées à la marche du véhicule sont assurées par des organes dédiés, le volume disponible dans la zone du poste de conduite est limité, en nombre de zones d'implantation. Il s'agit, en fait, d'autant d'espace utile perdu pour l'implantation de commandes secondaires, lesquelles se trouvent, en conséquence, éloignées du poste de conduite, un tel éloignement ayant pour effet de détourner trop longtemps de la route l'attention du conducteur en situation de roulage du véhicule.

Différentes tentatives de regroupement de commandes de contrôle de marche d'un véhicule automobile ont été proposées.

Parmi celles-ci, on peut citer le dispositif de commande décrit par la demande de brevet WO 01/47738.

Le dispositif décrit par le document précité, spécifique à une boîte à vitesses semi-automatique, est plus particulièrement adapté à l'actionnement d'un frein supplémentaire. En particulier, ce dispositif met en oeuvre un levier, le changement de vitesse étant opéré par rotation d'une partie du dispositif autour de l'axe longitudinal du levier.

En outre, la sélection d'une position de changement de rapport de vitesse implique la manoeuvre du levier dans une direction orthogonale à l'axe longitudinal de celui-ci.

Une telle combinaison de mouvement du levier pour la seule sélection de changement du rapport de vitesse apparaît complexe et peu ergonomique pour le conducteur.

Le document DE 42 33 938 décrit un dispositif de commande de changement de vitesses à pilotage électronique pour véhicule automobile dans lequel la commande de changement est effectuée au moyen d'un levier de sélection mobile en rotation dans deux plans sensiblement orthogonaux. La sélection des rapports de boîte est effectuée par déplacement du levier dans un plan orthogonal au plan de sélection des positions parcage P, marche arrière R, neutre N et marche avant D, (Drive), à partir de la position marche avant précitée.

Un tel système apparaît peu ergonomique, dans la mesure où le régime de sélection de montée respectivement de descente des rapports de boîte à vitesse, bien que s'effectuant par manoeuvre du levier dans le même plan, nécessite un déplacement symétrique de ce dernier par rapport à la position de marche avant D.

Un tel processus de sélection apparaît peu ergonomique ou nécessite, à tout le moins, un apprentissage spécifique.

La présente invention a pour objet de remédier à l'ensemble des problèmes des dispositifs de l'art antérieur utilisés sur les véhicules actuels ou proposés par les documents précités.

Le module intégral de contrôle de marche d'un véhicule automobile selon la présente invention a pour objet la mise en oeuvre d'une commande électrique regroupant la totalité des fonctions présentes sur les véhicules personnels actuels.

Un autre objet de la présente invention est la mise en oeuvre d'un module intégral de contrôle de marche d'un véhicule automobile pouvant être implanté sur des véhicules équipés d'une boîte à vitesses manuelle pilotée, BVMP, ou d'une boîte à vitesses automatique, BVA.

Un autre objet de la présente invention est la mise en oeuvre d'un module intégral de contrôle de marche d'un véhicule automobile, lequel, grâce à un volume largement inférieur aux commandes mécaniques de l'art antérieur, peut être implanté dans des zones jusque là inutilisables, tout en permettant de regrouper les fonctions et d'améliorer tant l'ergonomie et la sécurité offertes au conducteur que la portabilité ou transfert d'une gamme de véhicule à une autre, ce qui permet de diminuer sensiblement les coûts, grâce à une meilleure standardisation.

Un autre objet de la présente invention est la mise en oeuvre d'un module intégral de contrôle de marche d'un véhicule automobile, exécuté sous la forme d'un commodo ou d'un levier, permettant au conducteur d'accéder à toutes les commandes de fonction des véhicules actuels associées à la marche du véhicule et de fournir des prestations maximales en termes d'accessibilité, d'agrément, de maniabilité et de volume habitacle.

Un autre objet de la présente invention est la mise en oeuvre d'un module intégral de contrôle de marche d'un véhicule automobile susceptible d'être implanté avantageusement au voisinage du volant du véhicule, le conducteur, de ce fait, ayant la possibilité d'accéder à toutes les fonctions associées à la marche du véhicule tout en conservant les deux mains sur le volant, ce qui permet de réduire le temps de manipulation des organes de commande par le conducteur, et, en définitive, de rendre ce dernier plus attentif à la conduite.

Un autre objet de la présente invention est la mise en oeuvre d'un module intégral de contrôle de marche d'un véhicule automobile dont l'implantation spécifique, autorisée par le caractère intégral de ce dernier du fait du regroupement de l'ensemble des commandes actuelles, permet, en outre, la libération du volume situé entre les sièges avant du véhicule, volume occupé dans les véhicules actuels par le levier de changement de rapports de vitesse et/ou par le frein à main, le volume ainsi libéré pouvant alors avantageusement être utilisé pour placer, par exemple, un troisième passager avant, ou, le cas échéant, améliorer le confort et la sécurité des passagers avant, notamment lors des chocs latéraux, en redistribuant le volume disponible pour les assises avant du véhicule.

Un autre objet de la présente invention est, enfin, la mise en oeuvre d'un module intégral de contrôle de marche d'un véhicule automobile grâce auquel, en raison du regroupement de l'ensemble des fonctions actuellement disponibles, une simplification du poste de conduite du véhicule peut être mise en oeuvre, consécutivement à la réduction de tous les organes de commande de boîte à vitesses et de barillet de démarrage de moteur en un seul module de commande localisé, facile d'accès et dont l'ergonomie, la fonctionnalité et la lisibilité sont, en conséquence, améliorées.

Le document WO 02 066279, considéré l'état de la technique le plus proche, montre un module intégral de contrôle de marche d'un véhicule automobile, comme celui de la présente invention. Il est remarquable en ce qu'il comporte un levier de commande comprenant au moins un module de commande du démarrage du moteur de ce véhicule automobile et un module de commande d'une boîte de vitesse automatique.

Il trouve application à l'équipement de véhicules automobiles de tout type, en particulier de véhicules automobiles personnels, de poids lourds ou utilitaires par exemple.

Il sera mieux compris à la lecture de la description ci-après et à l'observation des dessins annexés, dans lesquels :
- la figure 1 représente, à titre illustratif, un schéma général, des éléments fonctionnels mis en oeuvre par le module intégral de contrôle de marche d'un véhicule automobile objet de la présente invention ;
- la figure 2A représente, à titre illustratif, un mode de mise en oeuvre spécifique non limitatif du module de commande de démarrage du moteur du véhicule automobile ;
- la figure 2B représente, à titre illustratif, un mode de mise en oeuvre spécifique non limitatif du module de commande d'une boîte de vitesse automatique équipant le module intégral de contrôle de marche d'un véhicule automobile conforme à l'objet de la présente invention ;
- la figure 3A représente une vue éclatée montrant l'agencement relatif des différentes pièces constitutives du module intégral de commande de la marche d'un véhicule automobile, conforme à l'objet de la présente invention ;
- la figure 3B représente, à titre illustratif, une vue éclatée montrant le détail de l'agencement relatif des différentes pièces constitutives d'un module de sélection de mode de changement de vitesse automatique et manuel, telles qu'illustrées en figure 3A ;
- la figure 3C représente, à titre illustratif, une vue éclatée montrant le détail de l'agencement relatif des différentes pièces constitutives d'un module de commande du démarrage moteur, entre les positions arrêt, roulage et démarrage ;
- la figure 3D représente, à titre illustratif, un montage spécifique d'un élément de commutation, sur le support de touches des module de changement de vitesse et de commande d'une boîte de vitesse automatique formant un commodo, conforme à l'objet de la présente invention ;
- la figure 3E représente, à titre illustratif, une vue éclatée montrant le détail de l'agencement relatif des différentes pièces permettant la mise en rotation du commodo objet de l'invention, tel que représenté en figures 3A à 3D, lors de la sélection de la marche arrière (R), du roulage automatique ou manuel (D) ou de l'arrêt neutre (N) ;
- la figure 3F représente, à titre illustratif, en vue éclatée, un montage spécifique d'un élément de commutation permettant d'assurer la sélection de la marche arrière (R), du roulage automatique ou manuel (D) ou de l'arrêt, neutre (N) et des pièces correspondantes, telles qu'illustrées en figure 3E ;
- la figure 4A représente, à titre purement illustratif, un schéma des connexions électriques et logiques de l'ensemble des fonctions de marche du véhicule commandées grâce à la mise en oeuvre d'un commodo conforme à l'objet de la présente invention ;
- la figure 4B représente, à titre illustratif, un schéma des connexions électriques physiques mises en oeuvre conformément au schéma de la figure 4A.

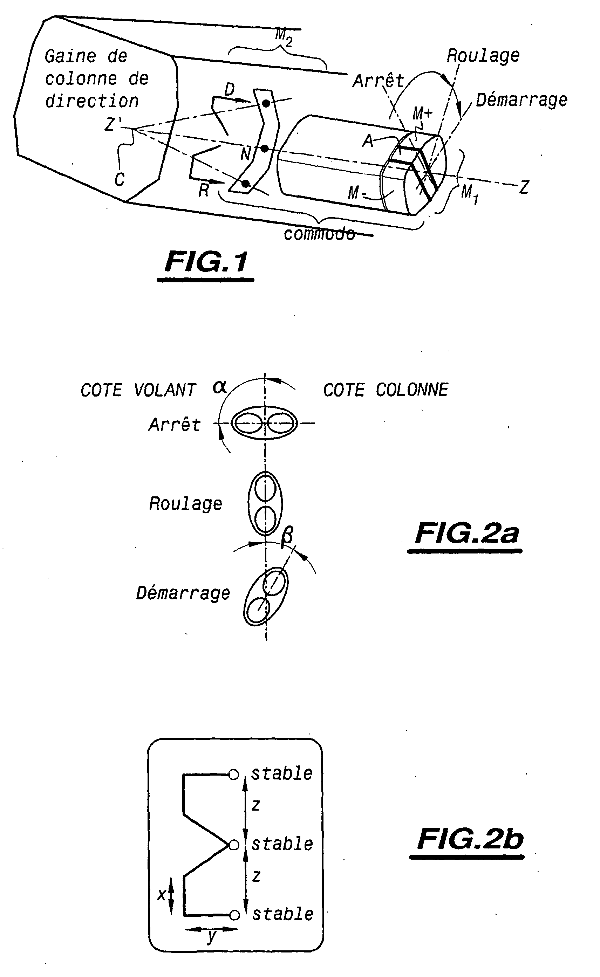

Une description plus détaillée d'un module intégral de contrôle de marche d'un véhicule automobile, conforme à l'objet de la présente invention, sera maintenant donnée en liaison avec la figure 1 et avec les figures suivantes.

D'une manière générale, le module intégral de contrôle de marche d'un véhicule automobile, représenté sur la figure précitée, comporte un module, noté M₁, de commande du démarrage du moteur du véhicule automobile et un autre module M₂ de commande d'une boîte de vitesses automatique, ainsi que représenté sur la figure précitée.

Les modules de commande M₁ et M2 de démarrage du moteur respectivement de commande de boîte de vitesses automatique sont associés pour constituer en fait un commodo, lequel, dans l'exemple non limitatif de mise en oeuvre représenté en figure 1, est monté au voisinage du volant du véhicule automobile et, en particulier, de la colonne de direction et de la gaine de colonne de direction de ce dernier.

De préférence, ainsi que représenté sur la figure 1, le commodo précité est constitué sous forme d'un levier auquel différents éléments sont associés pour exécuter les fonctions de commande de démarrage du moteur du véhicule et de commande de la boîte de vitesses automatique de ce dernier.

Ainsi qu'on l'a représenté en figure 1 notamment, le levier de commande est mobile en rotation autour de son axe longitudinal, l'axe Z'Z sur la figure 1, et, pour assurer la fonction de commande du démarrage du moteur, le module M₁ comprend au moins des circuits de détection d'une pluralité de positions en rotation discrètes du levier de commande, c'est-à-dire du commodo, par rapport à une position de référence.

Ainsi que représenté notamment en figure 1, la pluralité de positions en rotation discrètes comporte au moins :
- la position de référence, position stable, correspondant à la position d'arrêt du véhicule automobile ;
- une position de roulage stable correspondant à une autorisation de déplacement du véhicule ;
- et enfin une position de démarrage instable ou, à tout le moins métastable, correspondant à un lancement du moteur du véhicule.

En référence à la figure 2A, et selon une caractéristique particulièrement avantageuse du module intégral de contrôle de marche d'un véhicule automobile objet de la présente invention, le passage de la position de référence, dite encore position d'arrêt, à la position de roulage, puis à la position de démarrage est effectué par rotation manuelle du levier autour de son axe longitudinal Z'Z précité, dans un même sens de rotation, et le retour de la position de démarrage instable ou métastable à la position de roulage est effectué par rappel automatique dans le sens de rotation inverse.

Le retour de la position de roulage à la position d'arrêt ou de référence est effectué par rotation manuelle dans le sens de rotation inverse.

A titre d'exemple non limitatif, ainsi que représenté en figure 2A, le passage de la position d'arrêt ou de référence à la position de roulage peut être effectué par une rotation d'un angle de 90° par exemple, alors que le passage de la position de roulage, position stable, à la position de démarrage, position instable ou métastable, peut être effectué par une rotation dans le même sens de rotation d'un angle de 30° par exemple.

En outre, ainsi qu'on l'a représenté sur les figures 1 et 2B, le module de commande d'une boîte de vitesses automatique comprend, avantageusement, un système de sélection de marche arrière R, un système de sélection de roulage automatique ou manuel D, un système de sélection du neutre N, un système de sélection de mode de changement de vitesse automatique A et un système de sélection de mode de changement de vitesse manuel M⁺, M⁻.

Ainsi qu'on l'a représenté de manière détaillée en figure 1, le système de sélection de mode de changement de vitesse automatique A et manuel M⁺, M⁻ comporte avantageusement un bouton poussoir à deux positions pour chacune des fonctions sélectionnées, changement de vitesses automatique A, manuel M⁺ respectivement M⁻.

Le passage de l'une à l'autre des positions est réalisé manuellement par un effort exercé dans une direction sensiblement parallèle à l'axe longitudinal Z'Z du levier ou commodo.

En outre, conformément à un aspect remarquable du module intégral de contrôle de marche de véhicule automobile objet de la présente invention, le système de sélection de marche arrière R, de roulage automatique ou manuel D et de sélection de neutre N comporte, avantageusement, un système d'articulation en rotation du levier ou commodo précité dans un plan contenant l'axe longitudinal de symétrie Z'Z de ce dernier, le levier ou commodo étant mobile en rotation dans le plan entre trois positions :
- une position centrale correspondant à une position de sélection du neutre N ;
- une première position latérale à la position centrale correspondant à une position de sélection du roulage automatique ou manuel D ; et
- une deuxième position latérale à la position centrale et sensiblement symétrique à la première position latérale vis-à-vis de la position centrale. Cette deuxième position latérale correspond à une position de sélection de la marche arrière R.

En référence à la figure 1, on indique que le caractère de mobilité en rotation du commodo ou levier, dans un plan contenant l'axe longitudinal de symétrie de ce dernier, correspond avantageusement à un plan orthogonal sensiblement à l'axe longitudinal de la colonne de direction non représenté aux dessins.

Alors que les positions telles que position centrale, première position latérale et deuxième position latérale précitées sont, de préférence, contenues dans le plan contenant l'axe longitudinal Z'Z du commodo orthogonal à l'axe longitudinal de la colonne de direction, on comprend que, toutefois, le parcours du commodo pour atteindre les positions centrale, première position latérale et deuxième position latérale précitées peut correspondre à un cheminement en dehors du plan précité, ce cheminement étant représenté en figure 2B par exemple, laquelle représente un détail du cheminement représenté en figure 1.

A titre d'exemple non limitatif, on indique que, sur la figure 2B, les dimensions x, y et z qui représentent le cheminement effectif de l'axe longitudinal du commodo Z'Z et, en définitive, du commodo lui-même pour passer de la position centrale stable, position de neutre N, à l'une des première respectivement deuxième positions latérales stables correspondant à une position de sélection de roulage automatique ou manuel D respectivement à une position de sélection de la marche arrière R, peuvent correspondre à des segments de droite de longueur x, y et z de quelques dizaines de millimètres.

On comprend, en particulier, que les systèmes de détection d'une pluralité de positions en rotation discrète et le système de sélection constitutif du module de commande d'une boîte de vitesses automatique, ainsi que le module d'articulation en rotation du levier ou commodo dans un plan contenant l'axe longitudinal Z'Z de symétrie de ce dernier comporte, bien entendu, des moyens effecteurs, c'est-à-dire, en définitive, des transducteurs électroniques, lesquels délivrent, sur excitation engendrée par la position en rotation du levier autour de son axe longitudinal Z'Z par la position des boutons poussoirs A, M⁺, M⁻ ou respectivement par la position en rotation du levier dans un plan contenant l'axe longitudinal Z'Z de symétrie du levier, une valeur numérique codée représentative de la position et de l'état de sélection du levier de commande ou commodo précédemment cité.

On rappelle que la mise en place du commodo objet de la présente invention au voisinage du volant du véhicule automobile n'est pas limitative.

Toutefois, lorsque le commodo est placé au voisinage du volant, le commodo ou levier est sensiblement orthogonal à l'axe de la colonne de direction du véhicule. En particulier, on comprend que le commodo agit directement sur les organes de commande de la boîte de vitesses du véhicule par l'intermédiaire des effecteurs ou transducteurs précités.

En fait, sur la figure 1, on indique que le centre de rotation C du commodo dans le plan orthogonal à l'axe de la colonne de direction représente symboliquement tout organe de rotation relative du commodo par rapport à l'axe longitudinal de la colonne de direction précité, organe connu en tant que tel.

Ainsi, on comprend que la commutation électrique de la commande est assurée par des micro-circuits du type micro-rupteurs et/ou par la sélection en position de peignes de cuivre frottant sur des pistes électroniques jouant le rôle d'effecteurs.

Ainsi, pour chaque position de commande occupée par le commodo, une information binaire est renvoyée en sortie des circuits électriques ou effecteurs équipant ce dernier. Cette information binaire est alors communiquée à une carte électronique chargée de piloter le circuit de puissance de la boîte à vitesses et, ainsi, engager le rapport effectivement sélectionné.

Le commodo objet de la présente invention assure également, de manière particulièrement avantageuse, un rôle de restitution d'effort.

En effet, le conducteur du véhicule automobile est informé des différentes sélections par la réaction des organes et pièces mécaniques constitutives du commodo, cette réaction s'analysant en un retour d'effort en passage qui répond à des lois course/effort ou rotation/couple de rotation établies dans les guides ergonomiques classiques utilisés pour ce genre de commande.

Les systèmes de restitution d'effort sont alors avantageusement constitués par des systèmes à billes, des ressorts, ainsi que par la rampe nécessaire à la réalisation des lois course/effort précitées.

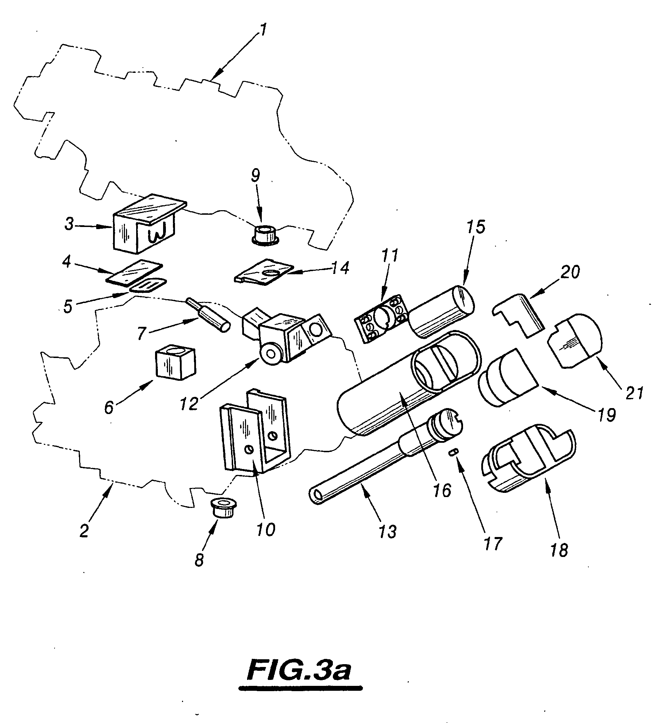

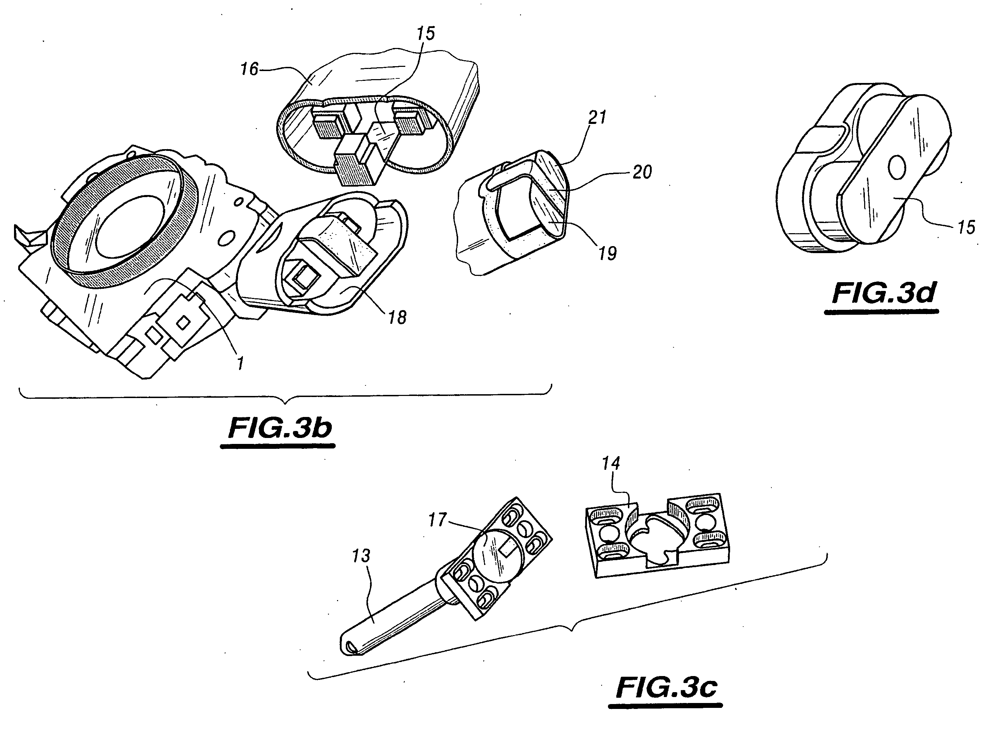

Une description plus détaillée d'un mode de mise en oeuvre préférentiel montrant l'agencement relatif des différentes pièces mécaniques constitutives du module intégral de commande ou commodo de la marche d'un véhicule automobile, conforme à l'objet de la présente invention, sera maintenant donnée en liaison avec la figure 3A et les figures 3B à 3F.

Sur l'ensemble des figures précitées, les pièces mécaniques correspondantes portent les références ci-après :
- 1: Boîtier supérieur
- 2: Boîtier inférieur
- 3 : Grille
- 4: Circuit imprimé de sélection RND
- 5: Elément glissant
- 6: Support d'élément glissant
- 7: Doigt
- 8: Pivot inférieur
- 9: Pivot supérieur
- 10 : Support de pivot
- 11 : Couvercle
- 12: Support de doigt
- 13 : Axe
- 14 : Cames de rotation
- 15: Circuit imprimé de sélection M/A
- 16 : Levier
- 17 : Micro-élément glissant
- 18: Support de touches ou bouton poussoir
- 19: Touche M⁺
- 20: Touche M/A
- 21 : Touche M⁻

Pour des raisons de commodité de montage et de mise en oeuvre au voisinage et sur la colonne de direction, le commodo objet de l'invention est monté dans le haut de la colonne de direction par l'intermédiaire du boîtier supérieur 1 et du boîtier inférieur 2, tels que représentés en figures 3A et 3B par exemple.

### ■ Mise en oeuvre de l'agencement mécanique constitutif du module de sélection de mode de changement de vitesse automatique A et manuel M+, M- :

Les touches sont montées dans un support de touches, repère 18, lequel assure leur guidage et leur maintien pour assurer leur fonction de commutation. Les touches précitées actionnent des micro-interrupteurs placés sur le circuit imprimé de sélection M/A portant la référence 15. Ce circuit imprimé de sélection M/A est solidaire du support de touches 18. La loi course/effort est celle des micro-interrupteurs.

### ■ Module de commande du démarrage du moteur pour la fonction arrêt/roulage/démarrage, tel que représenté en figure 2A :

Pour réaliser la fonction de rotation/restitution d'effort, un levier portant la référence 16 constitue la pièce principale de l'ensemble du commodo. La pièce précitée contient des logements pour des cames de rotation portant la référence 14, lesquelles permettent la restitution d'effort lors de la manoeuvre, c'est-à-dire de la rotation du commodo autour de son axe longitudinal de symétrie Z'Z pour assurer la sélection arrêt/roulage/démarrage.

Dans cette situation, le levier 16 est alors bloqué en translation par le support de doigt 12 représenté en figure 3A, ce support de doigt étant solidaire de l'axe 13. Le levier 16 est toutefois libre en rotation, ce qui assure la liberté de rotation du commodo autour de l'axe Z'Z.

L'axe 13 précédemment cité a également pour fonction le maintien d'un ressort et de deux billes qui assurent la restitution des efforts.

La fonction de commutation est alors assurée par le circuit imprimé de sélection M⁺/M⁻/arrêt/démarrage portant la référence 15, lequel est maintenu sur le support de touches 18. Ce circuit imprimé est un circuit imprimé double face, par exemple, et comporte des pistes angulaires sous sa face inférieure mises en contact par l'intermédiaire d'un micro-boîtier de contact à ressort, désigné micro-élément glissant portant la référence 17.

La figure 3D représente le montage du circuit imprimé M+/M-/arrêt/démarrage portant la référence 15 sur la base du support de touches 18.

### ■ Module de commande de boîte de vitesses automatique et de sélection des fonctions R, N, D correspondantes :

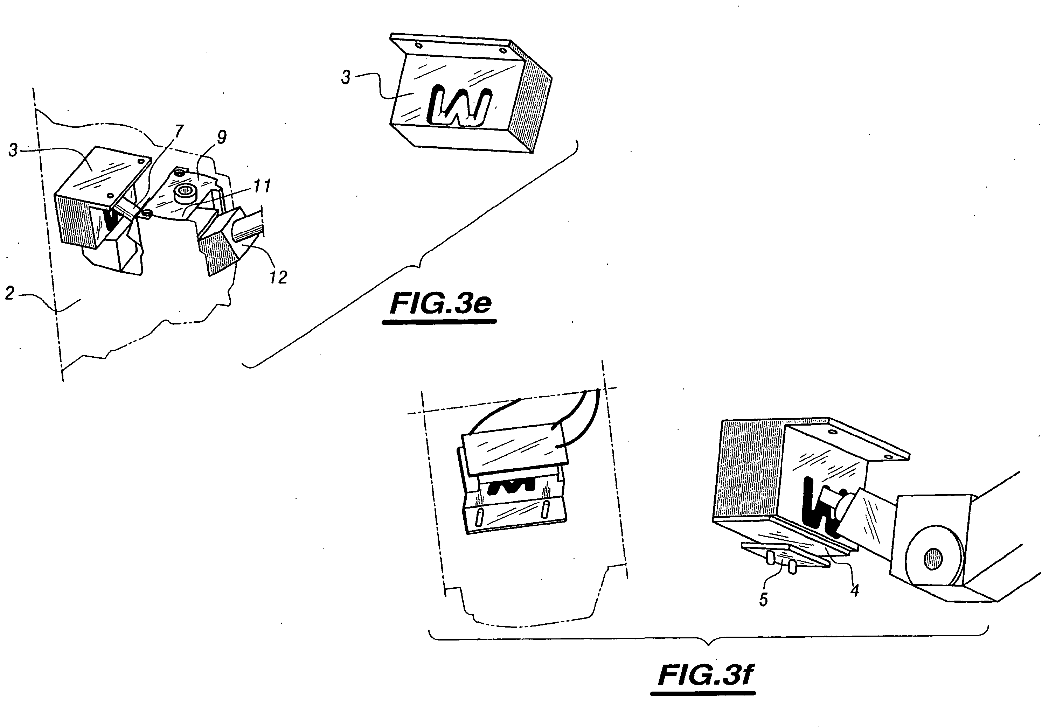

La fonction de rotation/de restitution d'effort est, dans ce cas, ainsi que représenté en figures 3A et 3E, réalisée par un ensemble de rotation ou ensemble pivot RND comportant une came en trois dimensions assurant également le guidage du mouvement suivant le profil de la cinématique de manoeuvre, tel que représenté en figure 2B.

La cinématique de manoeuvre est alors représentée matériellement par la grille 3, laquelle, ainsi que représenté en figure 3A, est fixée sur le boîtier supérieur portant la référence 1.

Ainsi que représenté sur la figure 3A et la figure 3E, la grille 3 comporte alors un sillon reproduisant la cinématique de manoeuvre du commodo, telle que représentée en figure 2B, ainsi que décrit précédemment dans la description.

Ainsi que représenté en figure 3E, la composante verticale est formée du support de doigt 12, lequel maintient fixe l'axe 13. Ce dernier est en rotation par rapport au support de pivot 10. Le couvercle 11 est vissé sur le support de pivot 10.

La composante de rotation horizontale, pour assurer la cinématique représentée en figure 2B, est assurée par deux pivots référencés 8 et 9 dans les boîtiers supérieur et inférieur. Ces deux pivots sont fixés sur le support de pivot 10.

Le support de doigt 12 maintient également le doigt 7, lequel assure la restitution de l'effort et le guidage du commodo selon la cinématique de sélection des positions R, N, D, telle que représentée en figure 2B par l'intermédiaire de la grille 3.

La fonction de commutation, du fait de la sélection des positions R, N, D, telle que représentée en figure 2B, est alors réalisée par un circuit imprimé de sélection RND portant la référence 4, lequel est fixé sur la grille 3. Il comporte des pistes angulaires mises en contact par un organe glissant 5 vissé sur le support d'élément glissant 6.

Le circuit imprimé de sélection RND 4 et le montage de ce dernier sur la grille 3, ainsi que les pistes angulaires ménagées sur ce circuit imprimé sont représentés en figure 3F.

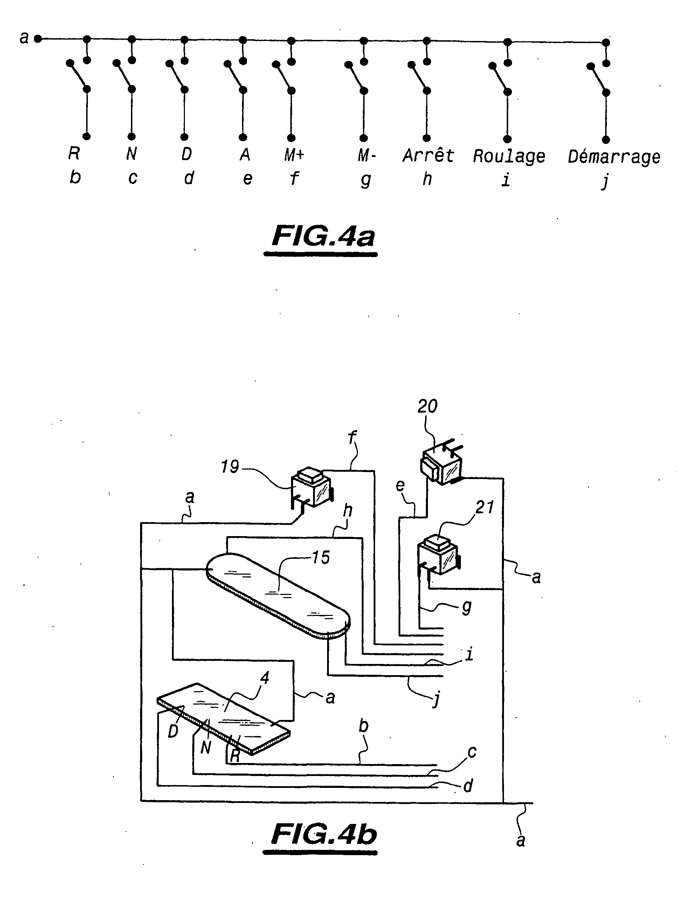

Une description plus détaillée du schéma électrique de connexion et, en particulier, du schéma logique de l'ensemble des éléments de commutation précités, pour réaliser la sélection de l'ensemble des fonctions et des commandes du commodo formant un module intégral de contrôle de marche d'un véhicule automobile conforme à l'objet de la présente invention sera maintenant donnée en liaison avec les figures 4A et 4B.

En liaison avec la figure 4A, on indique que les fonctions précitées sont sélectionnées successivement en parallèle, chaque fonction sélectionnée par l'intermédiaire des pièces mécaniques des effecteurs ou transducteurs précédemment décrits permettent, en fait, l'envoi d'une tension de commande et, finalement, d'un code correspondant à la position et à la fonction effectivement sélectionnée. L'ensemble des codes ainsi sélectionnés est adressé et géré par un microprocesseur, par exemple, de façon à sélectionner les commandes et les circuits de puissance de la boîte à vitesses équipant le véhicule automobile.

Sur la figure 4A, et pour cette raison, on a représenté la sélection de chacune des fonctions à partir de connexion d'une commande générale a et de commandes successives b, c, d, e, f, g, h, i, j, chacune des connexions b à j sur commutation de l'interrupteur correspondant à l'effecteur précité permettant d'envoyer une tension de commande délivrant le code correspondant à la fonction sélectionnée.

Sur la figure 4B, on a représenté la connexion électrique physique correspondante pour les différents éléments de commutation et effecteurs précédemment mentionnés dans la description. Les mêmes références désignent, bien entendu, les mêmes éléments que dans le cas des figures 3A à 3F.

On a ainsi décrit un module intégral de contrôle de marche de véhicule automobile, encore appelé commodo, particulièrement performant, dans la mesure où l'ensemble des fonctions normalement associées à une pluralité d'organes de commande séparés physiquement sont regroupés sur le commodo précité et les positions intégrées à ce dernier associées à la dynamique du véhicule automobile sont aussi diverses que :
- la sélection du mode de roulage, position PARK, position REVERSE, position NEUTRE, position DRIVE. La position PARK n'est pas présente dans tous les cas de figure lorsque, par exemple, le véhicule est équipé d'une boîte à vitesses de type BVMP ;
- la sélection du type de roulage automatique en position D ou manuel M
- le changement de rapport de boîte en manuel par impulsion ;
- le démarrage moteur, position moteur arrêté, position contact, position moteur démarré ;
- augmentation de la consigne respectivement diminution de la consigne obtenues par appui du bouton correspondant.

En particulier, l'architecture électrique des circuits de commande, telle que représentée en figures 4A et 4B, ne nécessite aucune consommation de courant en raison du fait que la commande effective est assurée par simple commutation de tension.

## Revendications

1. Module intégral de contrôle de marche d'un véhicule automobile, comportant un levier de commande comportant au moins des moyens de commande (M1) de démarrage du moteur, et des moyens de commande (M2) d'une boîte de vitesses automatique, associés pour constituer un commodo, **caractérisé en ce que** : ledit commodo est constitué sous forme d'un levier (13) pour exécuter respectivement les fonctions de commande de démarrage par rotation manuelle du levier (13) autour de son axe longitudinal de symétrie et de commande de boîte de vitesses automatique par rotation dudit levier (13) dans un plan contenant l'axe longitudinal de symétrie.

2. Module selon la revendication 1, **caractérisé en ce que** ledit levier de commande (13) étant mobile en rotation autour de son axe longitudinal, lesdits moyens de commande du démarrage du moteur (M1) comprennent au moins des moyens de détection d'une pluralité de positions en rotation discrètes dudit levier de commande (13) par rapport à une position de référence, ladite pluralité de positions en rotation discrètes comportant au moins :
- ladite position de référence, stable, correspondant à la position d'arrêt dudit véhicule automobile ;
- une position de roulage, stable, correspondant à une autorisation de déplacement du véhicule ;
- une position de démarrage, instable, correspondant à un lancement du moteur du véhicule, le passage de la position de référence à la position de roulage puis à la position de démarrage étant effectué par rotation manuelle dudit levier (13) dans un même sens de rotation et le retour de la position de démarrage, instable, à la position de roulage étant effectué par rappel automatique dans le sens de rotation inverse, le retour de la position de roulage à la position d'arrêt étant effectué par rotation manuelle dans le sens de rotation inverse.

3. Module selon la revendication 1 ou 2, **caractérisé en ce que** lesdits moyens de commande d'une boîte de vitesse automatique (M2) comprennent au moins :
- un moyen de sélection de marche arrière (R) ;
- un moyen de sélection de roulage automatique ou manuel (D) ;
- un moyen de sélection de neutre (N) ;
- un moyen de sélection de mode de changement de vitesse automatique (A) ;
- un moyen de sélection de mode de changement de vitesse manuel (M⁺, M⁻).

4. Module selon la revendication 3, **caractérisé en ce que** lesdits moyens de sélection de mode de changement de vitesse automatique (A) et manuel (M⁺, M⁻) comportent un bouton poussoir à deux positions, le passage de l'une à l'autre desdites positions étant réalisé manuellement par un effort exercé dans une direction sensiblement parallèle à l'axe dudit levier (13).

5. Module selon la revendication 3 ou 4, **caractérisé en ce que** lesdits moyens de sélection de marche arrière (R) de roulage automatique ou manuel (D) et de sélection de neutre (N) comportent :
- des moyens d'articulation en rotation dudit levier dans un plan contenant l'axe longitudinal de symétrie dudit levier (13), ledit levier (13) étant mobile en rotation dans ledit plan entre trois positions,
- une position, centrale, correspondant à une position de sélection du neutre ;
- une première position, latérale à ladite position centrale, correspondant à une position de sélection du roulage automatique ou manuel ;
- une deuxième position latérale à ladite position centrale et sensiblement symétrique à ladite première position vis-à-vis de ladite position centrale et correspondant à une position de sélection de la marche arrière, le passage de l'une à l'autre des positions étant effectué manuellement

6. Module selon l'une des revendications 2 à 5, **caractérisé en ce que** lesdits moyens de détection d'une pluralité de positions en rotation discrètes, lesdits moyens de sélection constitutifs des moyens de commande d'une boîte de vitesse automatique et lesdits moyens d'articulation en rotation dudit levier dans un plan contenant l'axe longitudinal de symétrie dudit levier (13) comportent des moyens effecteurs délivrant, sur excitation engendrée par la position en rotation dudit levier autour de son axe longitudinal, la position des boutons poussoirs, respectivement par la position en rotation dudit levier dans un plan contenant l'axe longitudinal de symétrie dudit levier (13), une valeur numérique codée représentative de la position et de l'état de sélection dudit levier de commande.

7. Module selon l'une des revendications 1 à 6, **caractérisé en ce que** ledit levier de commande (13) est placé au voisinage du volant dudit véhicule automobile.

8. Module selon la revendication 7, **caractérisé en ce que** ledit levier (13) est sensiblement orthogonal à l'axe de la colonne de direction du véhicule.

## Patentansprüche

1. Integriertes Modul zur Kontrolle des Betriebs eines Kraftfahrzeuges mit einem Steuerhebel, welcher wenigstens Steuermittel (M1) für das Anlassen des Motors und Steuermittel (M2) für ein automatisches Getriebes aufweist, die zur Bildung eines Bedienteils zusammengefasst sind, **dadurch gekennzeichnet, dass** das Bedienteil in Form eines Hebels (13) für die Ausführung der Funktionen der Steuerung des Anlassens durch manuelle Drehung des Hebels (13) um seine Symmetrielängsachse und der Steuerung des automatischen Getriebes durch Drehung des Hebels (13) in einer die Symmetrielängsachse enthaltenden Ebene ausgebildet ist.

2. Modul nach Anspruch 1, **dadurch gekennzeichnet, dass**, da der Steuerhebel (13) um seine Längsachse drehbar ist, die Steuermittel für das Anlassen des Motors (M1) wenigstens Mittel zur Feststellung einer Anzahl von diskreten Drehstellungen des Steuerhebels (13) in Bezug auf eine Referenzstellung aufweisen, wobei die Anzahl von diskreten Drehstellungen wenigstens
- die der Sperrstellung des Kraftfahrzeuges entsprechende stabile Referenzstellung,
- eine der Freigabe der Ortsveränderung des Fahrzeuges entsprechende stabile Fahrstellung,
- eine dem Starten des Fahrzeugmotors entsprechende instabile Anlassstellung, wobei der Übergang aus der Referenzstellung in die Fahrstellung und dann die Anlassstellung durch manuelle Drehung des Hebels (13) in gleichem Drehsinn bewirkt wird und die Rückkehr aus der instabilen Anlassstellung in die Fahrstellung durch ein automatisches Rückholen in dem entgegengesetzten Drehsinn bewirkt wird, wobei die Rückkehr aus der Fahrstellung in die Sperrstellung durch manuelle Drehung in dem entgegengesetzten Drehsinn bewirkt wird, aufweist.

3. Modul nach Anspruch 1 oder 2, **dadurch gekennzeichnet, dass** die Steuermittel für ein automatisches Getriebe (M2) wenigstens
- Mittel zur Auswahl des Rückwärtsgangs (R);
- Mittel zur Auswahl des automatischen oder manuellen Fahrens (D);
- Mittel zur Auswahl der Neutralstellung (N);
- Mittel zur Auswahl des Modus des automatischen Schaltens (A);
- Mittel zur Auswahl des Modus des manuellen Schaltens (M⁺, M⁻) umfassen.

4. Modul nach Anspruch 3, **dadurch gekennzeichnet, dass** die Mittel zur Auswahl des Modus des automatischen Schaltens (A) und manuellen Schaltens (M⁺, M⁻) einen Zweistellungs-Druckknopf aufweisen, wobei der Übergang aus der einen in die andere dieser Stellungen manuell durch eine Kraft bewirkt wird, die in einer zur Achse des Hebels (13) im Wesentlichen parallelen Richtung ausgeübt wird.

5. Modul nach Anspruch 3 oder 4, **dadurch gekennzeichnet, dass** die Auswahlmittel für den Rückwärtsgang (R), des automatischen oder manuellen Fahrens (D) und der Neutralstellung (N)
- Mittel zur Anlenkung des Hebels in Drehung in einer Ebene, die die Symmetrielängsachse des Hebels (13) enthält, wobei der Hebel (13) in der Ebene zwischen drei Stellungen,
- einer Zentralstellung, die einer Auswahl der Neutralstellung entspricht,
- einer ersten Stellung seitlich der Zentralstellung, die einer Stellung der Auswahl des automatischen oder manuellen Fahrens entspricht,
- einer zweiten Stellung seitlich der Zentralstellung und im Wesentlichen symmetrisch zu der ersten Stellung gegenüber der Zentralstellung und entsprechend einer Stellung der Auswahl des Rückwärtsgangs, wobei der Übergang von der einen in die andere der Stellungen manuell bewirkt wird, drehbar ist, aufweist.

6. Modul nach einem der Ansprüche 2 bis 5, **dadurch gekennzeichnet, dass** die Mittel zur Feststellung einer Anzahl diskreter Drehstellungen, die Auswahlmittel, die die Steuermittel für ein automatisches Getriebe bilden und die Anlenkmittel für den Hebel zur Drehung in einer die Symmetrielängsachse des Hebels (13) enthaltenden Ebene Wirkungsmittel aufweisen, die mit Anregung, welche durch die Drehstellung des Hebels um seine Längsachse, die Stellung der Druckknöpfe bzw. die Drehstellung des Hebels in einer die Symmetrielängsachse des Hebels (13) enthaltene Ebene bewirkt wird, einen kodierten numerischen Wert erzeugen, der für die Stellung und den Auswahlzustand des Steuerhebels repräsentativ ist.

7. Modul nach einem der Ansprüche 1 bis 6, **dadurch gekennzeichnet, dass** der Steuerhebel (13) in der Nähe des Lenkrads des Kraftfahrzeuges angeordnet ist.

8. Modul nach Anspruch 7, **dadurch gekennzeichnet, dass** der Hebel (13) im Wesentlichen senkrecht zur Achse der Lenksäule des Fahrzeuges ist.

## Claims

1. Integral module for controlling the operation of a motor vehicle, comprising a control lever having at least means (M1) for controlling the starting of the engine and means (M2) for controlling an automatic gear box, which means are associated to form a control unit, **characterised in that** said control unit is in the form of a lever (13) for performing the functions of controlling starting by manual rotation of the lever (13) about its longitudinal axis of symmetry and of controlling an automatic gear box by rotation of said lever (13) in a plane containing the longitudinal axis of symmetry.

2. Module according to claim 1, **characterised in that** said control lever (13) is movable in rotation about its longitudinal axis and said means for controlling the starting of the engine (M1) comprise at least means for detecting a plurality of discrete rotational positions of said control lever (13) relative to a reference position, said plurality of discrete rotational positions comprising at least:
- said reference position, which is stable, corresponding to the stop position of said motor vehicle;
- a drive position, which is stable, corresponding to authorisation of movement of the vehicle;
- a starting position, which is instable, corresponding to starting up of the engine of the vehicle, passage from the reference position to the drive position then to the starting position being effected by manual rotation of said lever (13) in the same direction of rotation, and return from the starting position, which is instable, to the drive position being effected by automatic return in the opposite direction of rotation, return from the drive position to the stop position being effected by manual rotation in the opposite direction of rotation.

3. Module according to claim 1 or 2, **characterised in that** said means for controlling an automatic gear box (M2) comprise at least:
- a means for selecting reverse gear (R);
- a means for selecting automatic or manual drive (D);
- a means for selecting neutral (N);
- a means for selecting automatic gear change mode (A);
- a means for selecting manual gear change mode (M⁺, M⁻).

4. Module according to claim 3, **characterised in that** said means for selecting automatic (A) and manual (M⁺, M⁻) gear change mode comprise a two-position push button, passage from one of said positions to the other being carried out manually by a force exerted in a direction substantially parallel to the axis of said lever (13).

5. Module according to claim 3 or 4, **characterised in that** said means for selecting reverse gear (R), automatic or manual drive (D) and for selecting neutral (N) comprise:
- means for articulation of said lever for rotation in a plane containing the longitudinal axis of symmetry of said lever (13), said lever (13) being movable in rotation in said plane between three positions,
- a central position corresponding to a position for selection of neutral;
- a first position, lateral with respect to said central position, corresponding to a position for selection of automatic or manual drive;
- a second position, lateral with respect to said central position and substantially symmetrical to said first position in respect of said central position, corresponding to a position for selection of reverse gear, passage from one of the positions to another being carried out manually.

6. Module according to any one of claims 2 to 5, **characterised in that** said means for detecting a plurality of discrete rotational positions, said selection means constituting means for controlling an automatic gear box and said means for articulation of said lever for rotation in a plane containing the longitudinal axis of symmetry of said lever (13) comprise effector means which, on excitation generated by the rotational position of said lever about its longitudinal axis, the position of the push buttons or by the rotational position of said lever in a plane containing the longitudinal axis of symmetry of said lever (13), deliver a coded numerical value which represents the position and the selection state of said control lever.

7. Module according to any one of claims 1 to 6, **characterised in that** the control lever (13) is located in the vicinity of the steering wheel of said motor vehicle.

8. Module according to claim 7, **characterised in that** said lever (13) is substantially orthogonal with respect to the axis of the steering column of the vehicle.
